# EUROPÄISCHE PATENTANMELDUNG

(11) **EP 4 442 395 A1**
(43) Veröffentlichungstag der Anmeldung: **09.10.2024**
(21) Anmeldenummer: 23166459.0
(22) Anmeldetag: 04.04.2023
(51) Int. Cl.: B23C 5/08, B23G 1/32, B23G 5/18

(54) **WIRBELWERKZEUG MIT SCHNEIDBOLZEN**

(71) Anmelder: Gühring KG, 72458 Albstadt (DE)
(72) Erfinder: Edelmann, Steffen, 72336 Balingen (DE)
(74) Vertreter: Gleim, Christian Ragnar

(57) **Zusammenfassung**

Die Erfindung betrifft ein Wirbelwerkzeug 1 zum Außenwirbeln eines Werkstücks, umfassend einen Tragring 2 mit einer Drehachse 4 und einem hierzu koaxial angeordneten Durchgangsloch 3, an welchem mehrere Aufnahmen jeweils zueinander beabstandet, gleichmäßig verteilt ausgebildet sind, in welchen jeweils ein Schneideinsatz mit einer Schneide 10 angeordnet ist, wobei die Schneideinsätze in das Durchgangsloch 3 ragen und Befestigungselemente vorhanden sind, mit denen die Schneideinsätze an dem Tragring 2 lösbar befestigt sind, dadurch gekennzeichnet, dass die Aufnahmen Durchgangsbohrungen 5 sind, die Schneideinsätze Schneidbolzen 6 sind und in den Durchgangsbohrungen 5 jeweils ein Anschlag vorhanden ist, an dem jeweils einer der Schneidbolzen 6 anliegt.

## Beschreibung

Die vorliegende Erfindung betrifft ein Wirbelwerkzeug zum Außenwirbeln eines Werkstücks um eine Drehachse, um damit Gewinde, Schnecken, Profile usw. zu erzeugen. Das Wirbelwerkzeug umfasst einen Tragring, mehrere Schneideinsätze und Befestigungselemente.

Beim Wirbeln handelt es sich um ein zerspanendes Fertigungsverfahren, welches üblicherweise mit einer Wirbelmaschine durchgeführt wird. Zum Wirbeln dient ein Wirbelwerkzeug, das mehrere Schneidelemente mit Schneiden aufweist. Beim Innenwirbeln liegen die Schneiden am äußeren Umfang des Wirbelwerkzeugs, sie zeigen nach außen und befinden sich während der Bearbeitung im Inneren eines hohlen Werkstückes. Dagegen liegen beim Außenwirbeln die Schneiden am inneren Umfang des Wirbelwerkzeugs, sie zeigen nach innen und umschließen während der Bearbeitung das Werkstück. Gemäß dem Schlussbericht "Trockenbearbeitung beim Wirbeln" im Verbundprojekt der TRIBO Hartmetall GmbH, Immelborn, des Fraunhofer-Institutes für Werkzeugmaschinen und Umformtechnik, Chemnitz und der LEISTRITZ AG, Nürnberg (veröffentlicht im März 2001, Nürnberg, siehe Seite 5) stellt das Wirbeln für ein bestimmtes Werkstücksortiment die wirtschaftlichste Art der Fertigung dar. Zu den durch Wirbeln erzeugbaren Geometrien gehören sowohl Außenkonturen, darunter Werkstücke mit wendelförmigem Konturverlauf (Spindeln, Schnecken, Verdichterwellen, Spiralbohrer), Kurven und Rotationsflächen (Kurbelwellen, Kugeln, Nockenwellen, Polygonprofile), als auch Innenkonturen (Innengewinde an Muttern und Großteilen).

Zum Stand der Technik bezüglich dem Außenwirbeln von Werkstücken gehört die europäische Patentanmeldung EP 4 129 545 A1 für ein Wirbelwerkzeug, welches insbesondere ein Gewinde aufbringt. Das Wirbelwerkzeug umfasst einen Körper mit integral daran ausgebildeten Schneidzähnen. Die Schneidkanten der Schneidzähne und der Trägerabschnitt sind integrale Teile des Wirbelwerkzeugs und der Trägerabschnitt umgibt die Schneidkanten ringförmig. Die Schneidzähne haben eine permanent feste Position am Trägerkörper und sind hier nicht austauschbar.

Die deutsche Gebrauchsmusterschrift DE 20 2017 007 546 U1 beschreibt ein Wirbelwerkzeug zur spanenden Bearbeitung eines Werkstücks, das mehrere Schneidplatten mit jeweils mindestens einer Schneide, einen Schneidplattenträger und mehrere Kühlmittelkanäle aufweist. Der eine Schneidplattenträger verfügt über mehrere Schneidplatten-Aufnahmen, die in Umfangsrichtung über den Schneidplattenträger verteilt angeordnet sind und zur Aufnahme und lösbaren Befestigung von jeweils einer der Schneidplatten dienen. Der Schneidplattenträger weist eine entlang einer Mittelachse des Schneidplattenträgers verlaufende Durchgangsöffnung auf, durch welche das Werkstück während der Bearbeitung hindurchführbar ist. Die Schneidplatten-Aufnahmen sind auf einer quer zu der Mittelachse verlaufenden Vorderseite des Schneidplattenträgers angeordnet und weisen jeweils eine quer zu der Mittelachse verlaufende Auflagefläche auf, auf der die jeweilige Schneidplatte plan aufliegt. Die Schneidplatten ragen im montiertem Zustand in die Durchgangsöffnung hinein. Die Schneidplatten sind jeweils durch die Verschraubung mit dem Schneidplattenträger kraftschlüssig und in der Aufnahme liegend formschlüssig mit dem Schneidplattenträger verbunden. Dabei fließt das Gewindespiel der Schraubverbindung jeweils in die Toleranzkette ein, die für die Relativlage der Schneiden zueinander und am Wirbelwerkzeug bestimmend ist.

Weiter beschreibt die deutsche Patentanmeldung DE 10 2015 115 310 A1 ein Wirbelwerkzeug zur spanenden Bearbeitung eines Werkstücks. Das ringförmige Wirbelwerkzeug umfasst drei oder eine Vielzahl von drei Schneidplatten, einen Schneidplattenträger und mehrere Befestigungselemente. Jede der Schneidplatten weist zumindest eine Schneidkante auf. Der Schneidplattenträger besitzt mehrere Schneidplatten-Aufnahmen zur Aufnahme von jeweils einer der Schneidplatten. Die Schneidplatten-Aufnahmen sind in Umfangsrichtung über den Schneidplattenträger verteilt angeordnet. Die Schneidplatten sind über mehrere lösbare Befestigungselemente in den Schneidplatten-Aufnahmen montiert. Im Unterschied zu den Aufnahmen gemäß der vorgenannten DE 20 2017 007 546 U1 sind die Schneidplatten-Aufnahmen zur Längsachse des Wirbelwerkzeuges hin offen, so dass die Schneidplatten bei der Montage in radialer Richtung gegen zwei in einem spitzen Winkel zueinanderstehende Begrenzungsflächen der Schneidplatten-Aufnahmen gedrückt werden können, womit das Gewindespiel eliminiert wird und die Schneidplatten nach einem Austausch reproduzierbar platziert werden. Die Schneidplatten umfassen zumindest zwei unterschiedliche Arten von Schneidplatten, wobei zumindest eine Schneidplatte einer ersten Art und eine Schneidplatte einer zweiten Art je Gruppe von drei, am Schneidplattenträger nebeneinander angeordneten Schneidplatten vorgesehen sind. Die Schneidplatten der ersten Art unterscheiden sich von den Schneidplatten der zweiten Art durch ihre Gesamtgeometrie, durch eine Abmessung der zumindest einen Schneidkante und/oder durch eine Form der zumindest einen Schneidkante und dienen der Erfüllung von zwei verschiedenen Schneidaufgaben. Verschiedene Schneidaufgaben können z. B. Vor- und Nachschnitt, das Schneiden unterschiedlicher Flächenbereiche eines Gewindeganges oder auch verschiedener Gewindegänge sein.

Als nächstliegender Stand der Technik beschreibt die deutsche Patentanmeldung DE 35 32 282 C2 einen ringförmigen Werkzeugträger zum Wirbeln bzw. Schälen von Außengewinde, Schnecken und Profilen, wobei der Werkzeugträger mit mehreren Schälwerkzeugen bestückt ist. Die Schälwerkzeuge sind jeweils in einer tangential verlaufenden Nut des Werkzeugträgers angeordnet. Die Werkzeughalter weisen in die Stirnfläche mündende, seitlich offene und mit einer Anschlagfläche versehene Aussparungen zur Aufnahme auswechselbarer, unterschiedlicher und plattenartig ausgebildeter Schälwerkzeuge auf. Die Schälwerkzeuge ragen mit ihrer Spanfläche über die Stirnfläche des Werkzeughalters hinaus und werden vom Werkzeughalter mit dem hinteren Teil ihrer Spanfläche gegen einen Anschlag am Werkzeugträger gedrückt. Die Andruckkraft dafür wird während der Montage erzeugt, in dem der mit dem Schälwerkzeug bestückte Werkzeughalter entlang der Nut fest gegen den Anschlag geschoben und dann fixiert wird. Dazu sind indem Werkzeughalter, der auf dem Werkzeugträger aufgeschraubt wird, die Bohrlöcher, durch die die Schrauben geführt sind, leicht aufgebohrt, sodass ein geringer Schiebeweg möglich wird. Ein axiales Gewindespiel der Schrauben wird beseitigt, indem die Schrauben durch eine gemeinsame Feder geführt sind. Um unterschiedlich profilierte Schälwerkzeuge gesichert an einer dafür vorgesehenen Position montieren zu können, weisen die mit den unterschiedlichen Schälwerkzeugen bestückten Werkzeughalter z. B. eine unterschiedliche Breite auf, um sie jeweils nur in eine Nut mit der dazu passenden Nutbreite einführen zu können. Die durch den Werkzeugträger und das Schälwerkzeug gebildete Baugruppe erfordert einen vergleichsweise hohen Montageaufwand für die Baugruppe und das Wirbelwerkzeug. Für den Austausch müssen entsprechend verschiedene derartige Baugruppen vorgehalten werden.

Es ist die Aufgabe der Erfindung, ein Wirbelwerkzeug mit robusten Schneideinsätzen zu schaffen, die einfach austauschbar und montierbar sind.

Diese Aufgabe wird mit einem Wirbelwerkzeug gemäß dem Hauptanspruch gelöst.

Bei dem erfindungsgemäßen Wirbelwerkzeug, das einen Tragring, mehrere Aufnahmen für Schneideinsätze und jeweils zwei Befestigungselemente für die Schneideinsätze in den Aufnahmen umfasst, sind die Aufnahmen als Durchgangsbohrungen und die Schneideinsätze als Schneidbolzen ausgestaltet. Weiter ist in jeder Durchgangsbohrung ein Anschlag vorhanden, sodass ein eingesteckter Schneidbolzen hier anliegt. Alle Schneidbolzen in einem Tragring sind identisch und liegen in der selben Ebene. Durch diese Merkmale des erfindungsgemäßen Wirbelwerkzeugs wird die Positionierung der Schneidbolzen vereinfacht und die Stabilität der Schneidbolzen auf dem Tragring verbessert.

Vorteilhafte Ausführungsformen sind in den Unteransprüchen beschrieben.

Vorteilhaft ist die Schneide eines jeden der Schneidbolzen mit zwei Schneidkanten ausgestaltet. Dadurch können zwei Gewindegänge in einem Werkstück in einem Bearbeitungsgang erzeugt werden. Es gibt also für die beiden Gewindegänge nur einen Typ an Schneidbolzen.

Bevorzugt handelt es sich bei den Anschlägen für die Schneidbolzen in den Durchgangsbohrungen um Anschlagbolzen. Diese Anschlagbolzen sind im Tragring fixiert und haben jeweils eine eigene Anschlagbolzenachse. Eine Anschlagbolzenachse verläuft im Tragring orthogonal zu der entsprechenden Durchgangsbohrungsachse der jeweiligen Durchgangsbohrung. Beide Achsen schneiden sich nicht. Weiter verläuft die Anschlagbolzenachse eines jeden Anschlagbolzens parallel zu einer durch die Schneide des zugeordneten Schneidbolzens aufgespannten Ebene und jeder Schneidbolzen weist eine dem zugeordneten Anschlagbolzen zugewandte und zu diesem tangential verlaufende Anschlagfläche auf.

Es ist von Vorteil, wenn jeder Schneidbolzen eine erste Nut und eine hierzu parallel verlaufende zweite Nut aufweist. Beide Nuten stehen orthogonal zu der jeweiligen Schneidbolzenachse des entsprechenden Schneidbolzens. Dabei weist die erste Nut eine schräge Seitenfläche auf, die mit einer Bodenfläche der ersten Nut einen stumpfen Winkel einschließt, dagegen weist die zweite Nut eine plane Bodenfläche auf.

Zweckdienlich sind als Befestigungselemente eines jeden Schneidbolzens ein erster und ein zweiter Gewindestift, welche durch Gewindebohrungen des Tragrings geschraubt sind und im Eingriff mit der ersten bzw. der zweiten Nut stehen. Der erste Gewindestift weist eine Konusfläche mit einem Konuswinkel auf, welcher gleich dem stumpfen Winkel der ersten Nut ist. Dadurch presst der festgezogene erste Gewindestift, der an der schrägen Seitenfläche der ersten Nut anliegt, den Schneidbolzen an den Anschlagsbolzen. Dagegen weist der zweite Gewindestift eine plane Stirnfläche auf. Damit presst der festgezogene zweite Gewindestift, welcher an der planen Bodenfläche der zweiten Nut anliegt, den Schneidbolzen an eine gegenüberliegende Wand der Durchgangsbohrung.

Vorteilhaft sind Verschlusselemente vorhanden. Die Verschlusselemente sind jeweils in einer der Durchgangsbohrungen angeordnet und verschließen diese, so dass keine Verunreinigungen in die Durchgangsbohrungen gelangen.

Besonders vorteilhaft befindet sich jeder Schneide zugeordnet eine Aussparung zum Abfließen von Spänen. Diese Aussparungen befinden sich am Tragring um die Durchgangsbohrungen und sind den Durchgangslöchern zugewandt.

Nachfolgend wird ein Ausführungsbeispiel der Erfindung anhand von Zeichnungen erläutert.

Es zeigen:
- Fig. 1a: eine Draufsicht auf ein Wirbelwerkzeug mit mehreren radial angeordneten Schneidbolzen,
- Fig. 1b: eine Seitenansicht eines Wirbelwerkzeugs gemäß Fig. 1a,
- Fig. 1c: ein Schnittbild eines Wirbelwerkzeugs gemäß Fig. 1a,
- Fig. 1d: einen vergrößerten Ausschnitt aus dem Schnittbild gemäß Fig. 1c,
- Fig. 2a: eine Seitenansicht eines Schneidbolzens mit Gewindestiften und Anschlagbolzen und
- Fig. 2b: eine Draufsicht auf einen Schneidbolzen gemäß Fig. 2a.

Alle Ausführungsbeispiele eines erfindungsgemäßen Wirbelwerkzeuges umfassen einen Tragring 2 mit einer Drehachse 4 und einem hierzu koaxial angeordneten Durchgangsloch 3, an welchem mehrere Durchgangsbohrungen 5 jeweils zueinander beabstandet, gleichmäßig verteilt ausgebildet sind. In den Durchgangsbohrungen 5 ist jeweils ein Schneidbolzen 6 mit einer Schneide 10 angeordnet ist, der in das Durchgangsloch 3 ragt. Die Schneidbolzen 6 sind an dem Tragring 2 lösbar befestigt. In den Durchgangsbohrungen 5 ist jeweils ein Anschlag vorhanden, an dem jeweils einer der Schneidbolzen 6 anliegt.

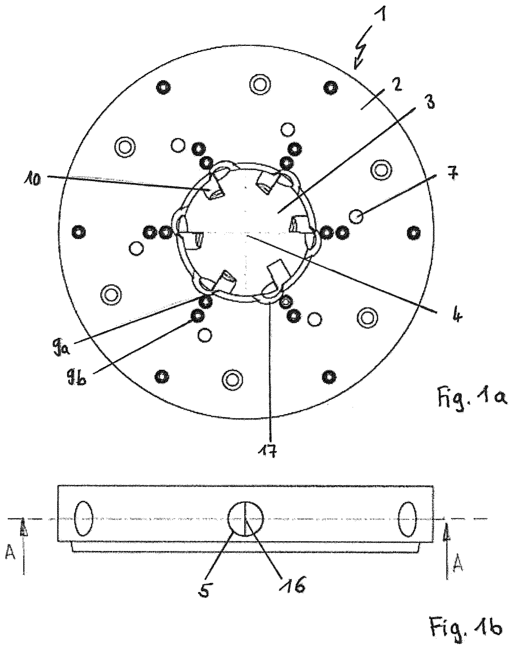

Ein erstes Ausführungsbeispiel ist in den Fig. 1a bis 2b gezeigt.

**Fig. 1a** zeigt eine Draufsicht das Wirbelwerkzeug 1 mit sechs radial angeordneten Schneidbolzen 6. Auf dem Tragring 2 sind erste und zweite Gewindestifte 9a, 9b zu erkennen, welche als Befestigungselemente dienen, um die Schneidbolzen 6 im Tragring 2 zu arretieren. Außerdem sind Anschlagbolzen 7 gezeigt, welche als Anschlag für die in den Durchgangsbohrungen 5 befindlichen Schneidbolzen 6 vorgesehen sind. Von den Schneidbolzen 6 in den Durchgangsbohrungen 5 sind in dieser Draufsicht nur die Schneiden 10 mit den Schneidkanten 11 sichtbar. Die Schneiden 10 sind von Aussparungen 17 im Tragring 2 umgeben und ragen in das Durchgangsloch 3. Die Aussparungen 17 sind vorteilhaft, weil beim Wirbeln anfallende Späne entfernt werden.

**Fig. 1b** zeigt eine Seitenansicht des Wirbelwerkzeugs 1. Die Durchgangsbohrungen 5 sind jeweils durch ein Verschlusselement 16 verschlossen . Die Schnittlinie A-A zeigt die Position für das Schnittbild in der folgenden Figur an.

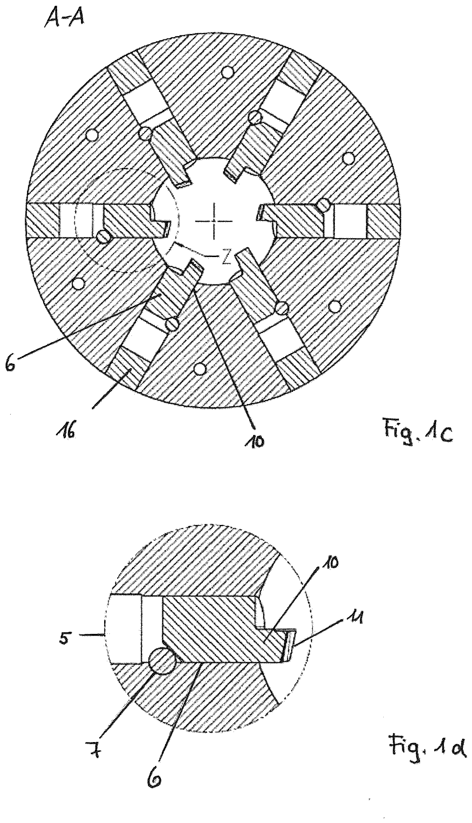

**Fig. 1c** zeigt ein Schnittbild des Wirbelwerkzeugs 1. Zu sehen sind die sechs um das Durchgangsloch 3 angeordneten Schneidbolzen 6 mit deren nach innen ragenden Schneiden 10. Außerdem sind Verschlusselemente 16 zu erkennen. Diese sind vorteilhaft, weil dadurch keine Verunreinigungen in die Durchgangsbohrungen 5 gelangen können.

**Fig. 1d** zeigt einen vergrößerten Ausschnitt Z aus dem Schnittbild gemäß Fig. 1c. Hier ist insbesondere ein Schneidbolzen 6 dargestellt, welcher sich in einer Durchgangsbohrung 5 befindet. Der Schneidbolzen 6 liegt am Anschlagbolzen 7 an, zur anderen Seite hin ragt der Schneidbolzen 6 mit seiner Schneide 10 und der hervorgehobenen Schneidkante 11 in das Durchgangsloch 3.

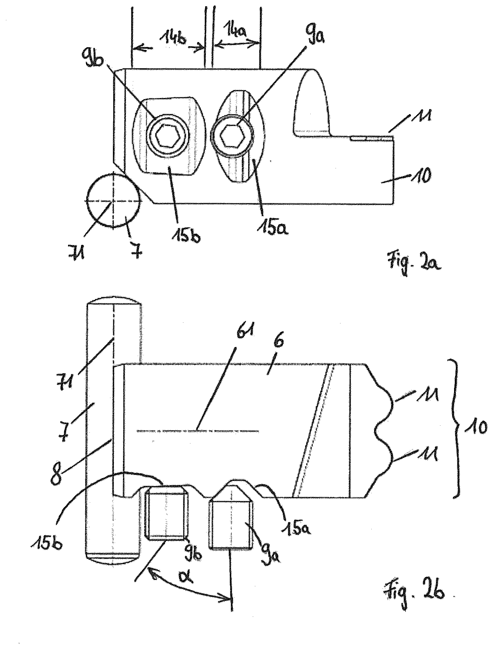

**Fig. 2a** zeigt eine Seitenansicht eines Schneidbolzens 6 mit einem der ersten und einem der zweiten Gewindestifte 9a, 9b und einem der Anschlagbolzen 7. Der erste und der zweite Gewindestift 9a, 9b ragen in die jeweils vorgesehene erste bzw. zweite Nut 14a, 14b. Die erste Nut 14a weist zwei schräge Seitenflächen 15a auf, welche eine Bodenplatte einschließen. Der erste Gewindestift 9a hat eine Konusfläche 12, die zu den zwei schrägen Seitenflächen 15a der ersten Nut 14a parallel verläuft. Der zweite Gewindestift 9b hat eine plane Stirnfläche 13, die zu der planen Bodenfläche 15b der zweiten Nut 14b parallel verläuft. Außerdem ist die Schneide 10 mit der Schneidkante 11 seitlich dargestellt.

**Fig. 2b** zeigt eine Draufsicht auf einen Schneidbolzen gemäß Fig. 2a. Vorteilhaft sind die zwei Schneidkanten 11 der Schneide 10, wodurch zwei Gewindegänge in einem Werkstück in einem Bearbeitungsgang erzeugt werden können. Dargestellt sind die Anschlagbolzenachse 71 von einem Anschlagbolzen 7 und die Schneidbolzenachse 61 von einem Schneidbolzen 6. Beide Achsen 61, 71 stehen orthogonal zueinander, sie schneiden sich aber nicht. Der Schneidbolzen 6 liegt an der Anschlagfläche 8 von dem Anschlagbolzen 7 an. Durch das Festziehen eines ersten Gewindestifts 9a wird über die Konusfläche 12 des ersten Gewindestifts 9a auf eine schräge Seitenfläche 15a der ersten Nut 14a Kraft übertragen, sodass der Schneidbolzen 6 fest an die der Anschlagfläche 8 des Anschlagbolzens 7 gepresst wird. In Fig. 2b ist der stumpfe Winkel α der ersten Nut 14a eingezeichnet, der gleich dem Konuswinkel des ersten Gewindestifts 9a ist. Durch das Festziehen eines zweiten Gewindestifts 9b wird über die plane Stirnfläche 13 des zweiten Gewindestifts 9b auf eine plane Bodenfläche 15b der zweiten Nut 14b Kraft übertragen, sodass der der Schneidbolzen 6 fest an die gegenüberliegende Wand der Durchgangsbohrung 5 gepresst wird.

## Patentansprüche

1. Wirbelwerkzeug (1) zum Außenwirbeln eines Werkstücks, umfassend einen Tragring (2) mit einer Drehachse (4) und einem hierzu koaxial angeordneten Durchgangsloch (3), an welchem mehrere Aufnahmen jeweils zueinander beabstandet, gleichmäßig verteilt ausgebildet sind, in welchen jeweils ein Schneideinsatz mit einer Schneide (10) angeordnet ist, wobei die Schneideinsätze in das Durchgangsloch (3) ragen und
Befestigungselemente vorhanden sind, mit denen die Schneideinsätze an dem Tragring (2) lösbar befestigt sind, **dadurch gekennzeichnet,**
**dass** die Aufnahmen Durchgangsbohrungen (5) sind, die Schneideinsätze Schneidbolzen (6) sind und in den Durchgangsbohrungen (5) jeweils ein Anschlag vorhanden ist, an dem jeweils einer der Schneidbolzen (6) anliegt.

2. Wirbelwerkzeug nach Anspruch 1, **dadurch gekennzeichnet,**
**dass** die Schneide (10) eines jeden der Schneidbolzen (6) mit zwei Schneidkanten (11) ausgestattet ist, womit zwei Gewindegänge in einem Werkstück in einem Bearbeitungsgang erzeugt werden können.

3. Wirbelwerkzeug nach Anspruch 1 oder 2, **dadurch gekennzeichnet,**
**dass** der Anschlag in einer jeden der Durchgangsbohrungen (5) ein im Tragring (2) fixierter Anschlagbolzen (7) ist, mit einer Anschlagbolzenachse (71), die orthogonal zu einer Durchgangsbohrungsachse (51) der jeweiligen Durchgangsbohrung (5), diese nicht schneidend, verläuft.

4. Wirbelwerkzeug nach Anspruch 3, **dadurch gekennzeichnet,**
**dass** die Anschlagbolzenachse (71) eines jeden der Anschlagbolzen (7) parallel zu einer durch die Schneide (10) des zugeordneten Schneidbolzens (6) aufgespannten Ebene verläuft und ein jeder der Schneidbolzen (6) eine dem zugeordneten Anschlagbolzen (7) zugewandte und zu diesem tangential verlaufende Anschlagfläche (8) aufweist.

5. Wirbelwerkzeug nach Anspruch 3 oder 4, **dadurch gekennzeichnet, dass** ein jeder der Schneidbolzen (6) eine erste Nut (14a) und eine hierzu parallele zweite Nut (14b) aufweist, die orthogonal zu einer Schneidbolzenachse (61) des Schneidbolzens (6) verlaufen.

6. Wirbelwerkzeug nach Anspruch 5, **dadurch gekennzeichnet, dass** die erste Nut (14a) eine schräge Seitenfläche (15a) aufweist, die mit einer Bodenfläche der ersten Nut (14a) einen stumpfen Winkel (α) einschließt und die zweite Nut (14b) eine plane Bodenfläche (15b) aufweist.

7. Wirbelwerkzeug nach Anspruch 5 oder 6, **dadurch gekennzeichnet, dass** die Befestigungselemente eines jeden Schneidbolzens (6) ein erster und ein zweiter Gewindestift (9a, 9b) sind, welche durch Gewindebohrungen des Tragrings (2) geschraubt sind und im Eingriff mit der ersten bzw. der zweiten Nut (14a, 14b) stehen.

8. Wirbelwerkzeug nach Anspruch 7, **dadurch gekennzeichnet, dass** der erste Gewindestift (9a) eine Konusfläche (12) aufweist mit einem Konuswinkel gleich dem stumpfen Winkel (α), sodass der festgezogene erste Gewindestift (9a), an der schrägen Seitenfläche anliegend, den Schneidbolzen (6) an den Anschlagsbolzen (8) presst.

9. Wirbelwerkzeug nach Anspruch 7 oder 8, **dadurch gekennzeichnet, dass** der zweite Gewindestift (9b) eine plane Stirnfläche (13) aufweist, sodass der festgezogene zweite Gewindestift (9b), an der planen Bodenfläche (15b) der zweiten Nut (14b) anliegend, den Schneidbolzen (6) an eine gegenüberliegende Wand der Durchgangsbohrung (5) presst.

10. Wirbelwerkzeug nach einem der vorherigen Ansprüche, **dadurch gekennzeichnet, dass** in jeder der Durchgangsbohrungen (5) ein Verschlusselement (16) vorhanden ist, welches entlang einer Umfangsfläche des Tragringes (2) die Durchgangsbohrungen (5) verschließt.

11. Wirbelwerkzeug nach einem der vorherigen Ansprüche, **dadurch gekennzeichnet, dass** der Tragring (2) um die Durchgangsbohrungen (5), dem Durchgangsloch (2) zugewandt, jeweils eine Aussparung (17) zum Abfließen von Spänen aufweist.
